# EUROPÄISCHE PATENTSCHRIFT

(11) **EP 4 555 381 B1**
(45) Veröffentlichungstag und Bekanntmachung des Hinweises auf die Patenterteilung: **08.10.2025**
(21) Anmeldenummer: 24752357.4
(22) Anmeldetag: 24.07.2024
(51) Int. Cl.: G03B 5/06, G03B 5/00, G02B 7/00, G03B 17/12

(54) **SCHEIMPFLUG-KAMERA**
SCHEIMPFLUG CAMERA
DISPOSITIF DE PRISE DE VUES DE SCHEIMPFLUG

(30) Priorität: 26.07.2023 DE 202023104198 U
(43) Veröffentlichungstag der Anmeldung: 21.05.2025
(73) Patentinhaber: LaVision GmbH, 37081 Göttingen (DE)
(72) Erfinder: DIERKSHEIDE, Uwe, 37085 Göttingen (DE)
(74) Vertreter: Schneider, Peter Christian
(86) Internationale Anmeldenummer: PCT/EP2024/071030
(87) Internationale Veröffentlichungsnummer: WO 2025/021874

(56) Entgegenhaltungen:
- EP-B1- 1 609 014
- CN-A- 112 822 383
- CN-U- 218 956 882
- US-A1- 2012 070 141
- US-A1- 2020 358 931

## Beschreibung

### Gebiet der Erfindung

Die Erfindung betrifft eine Scheimpflug-Kamera, umfassend
- einen Kameraanschluss zur Halterung einer Kamera,
- eine in dem Kameraanschluss gehalterte Kamera, umfassend einen in einer Sensorebene liegenden Sensor und eine mit dem Sensor verbundene Kameraelektronik, wobei die mittige Flächennormale des Sensors eine erste optische Achse vorgibt,
- einen Objektivanschluss zur festen Halterung eines eine zweite optische Achse vorgebenden Objektivs, der gegenüber dem Kameraanschluss um eine die erste optische Achse in der Sensorebene schneidende Schwenkachse derart verschwenkbar ist, dass die erste und die zweite optische Achse je nach Schwenkstellung koaxial zueinander verlaufen oder einander in der Sensorebene schneiden,
- einen Montagesockel, in dem der Objektivanschluss um die zweite optische Achse verdrehbar gelagert ist.

### Stand der Technik

Eine derartige Scheimpflug-Kamera ist bekannt aus der DE 10 2006 046 586 B4.

Das sogenannte Scheimpflug-Kriterium für die scharfe Abbildung einer Gegenstandsebene auf eine dazu verkippte, durch die Sensorfläche ihres Bildsensors definierte Bildebene einer Kamera besteht bekanntermaßen darin, dass sich die Gegenstandsebene, die Bildebene und die optische Hauptebene des Objektivs, mittels dessen die Abbildung erfolgt, in einer gemeinsamen Schnittlinie schneiden. Es sind eine Vielzahl von sogenannten Scheimpflug-Adaptern bekannt, die zwischen dem Gehäuse einer Kamera und dem Objektiv platzierbar sind und die verschiedensten Mechaniken anbieten, um das Objektiv (und damit seine Hauptebene) relativ zur Sensorebene des Bildsensors der Kamera zu verkippen. Beispielsweise die DE 10 2004 008 072 B3 , die US 2012/0070141 A1 oder die DE 10 2016 121 646 B3 offenbaren derartige Scheimpflug-Adapter. Viele dieser Adapter sind schwer zu bedienen und haben vor allem den Nachteil, den Arbeitsabstand zwischen dem Bildsensor und dem Objektiv zu vergrößern, sodass sie insbesondere mit Objektiven kleinen Arbeitsabstandes nicht kompatibel sind. Dies gilt insbesondere für sogenannte C-Mount-Objektive mit einem typischen Arbeitsabstand von 17,5 mm. Gerade solche Objektive kommen jedoch im industriellen und messtechnischen Kontext häufig zum Einsatz. Hier sind die Gegenstandsebene und die Kameraposition häufig durch bauliche Randbedingungen vorgegeben, sodass eine parallele Ausrichtung von Gegenstands- und Sensorebene nicht gewährleitstet werden kann. In solchen Fällen wird meist das Objektiv relativ zur Gegenstandsebene fest installiert und der sich aus der Relativposition von Gegenstandsebene und Objektiv-Hauptebene ergebende, erforderliche Kamerawinkel mittels des Scheimpflug-Adapters, dessen Objektivanschluss mit dem Objektiv und dessen Kameraanschluss mit der Kamera verbunden ist, eingestellt. Bei einer Verstellung des Kamerawinkels soll sich der auf dem Bildsensor abgebildete Ausschnitt möglichst nicht ändern.

Die eingangs genannte Druckschrift offenbart bereits einen diese Vorgaben einhaltenden, leicht bedienbaren Scheimpflug-Adapter, der sich insbesondere hinreichend kompakt bauen lässt, um auch Objektive mit kurzen Arbeitsabständen zum Einsatz bringen zu können.

Nachteilig ist allerdings der mechanisch aufwändige Aufbau des Kameraanschlusses, der einerseits drehbar in einem schwenkbaren Teil des Adaptergehäuses gelagert sein muss und der andererseits selbst eine mechanische Schnittstelle zur festen Fixierung einer separaten Kamera bereitstellen muss. Insbesondere vor dem Hintergrund industrieller Anwendungen, bei denen, beispielsweise im Rahmen einer Produktionsüberwachung, nur eine einmalige, dafür aber dauerhafte Installation einer solchen Scheimpflug-Kamera (bestehend aus Scheimpflug-Adapter und eigentlicher Kamera) erfolgt, die im Laufe ihrer Standzeit lediglich gelegentlicher Nachjustierungen bedarf, schlägt sich dieser Aufwand in unnötigen Kosten nieder.

### Aufgabenstellung

Es ist die Aufgabe der vorliegenden Erfindung, eine gattungsgemäße Scheimpflug-Kamera mit einfacherer Mechanik kostengünstig herzustellen.

### Darlegung der Erfindung

Diese Aufgabe wird in Verbindung mit den Merkmalen des Oberbegriffs von Anspruch 1 dadurch gelöst, dass die Kamera einen zylindrischen Sensorträger aufweist,
- auf dessen vorderer Stirnwand der Sensor in mittiger Positionierung und in zur Zylinderachse des Sensorträgers normaler Ausrichtung fixiert ist und
- dessen hintere Stirnwand eine Schnittstelle zu der im Inneren des Trägers angeordneten Kameraelektronik trägt,
wobei der Kameraanschluss eine zentrale, kreisförmige Durchgangsöffnung aufweist, in der der Sensorträger axial fest und um seine Zylinderachse verdrehbar gelagert ist.

Bevorzugte Ausführungsformen sind Gegenstand der abhängigen Schutzansprüche.

Die Grundidee der vorliegenden Erfindung besteht darin, anstelle eines separaten, zur Aufnahme einer "herkömmlichen" Kamera ausgebildeten Kameraanschlusses und einer separaten "herkömmlichen" Kamera eine speziell geformte Kamera vorzusehen, die anstelle des bekannten Kameraanschlusses direkt im Gehäuse des dann nicht mehr so zu bezeichnenden Adapters gelagert ist. Mit anderen Worten wird also ein integriertes System aus Kamera und Scheimpflug-Gelenk vorgeschlagen, welches zu seiner Funktionstüchtigkeit lediglich noch mit einem Objektiv versehen werden muss. Erfindungsgemäß ist also die speziell geformte Kamera im gehäusefesten Kameraanschluss drehbar gelagert und nicht fest in einem drehbar im Gehäuse gelagerten Kameraanschluss fixiert. Dies hat nicht nur im Hinblick auf die vereinfachte Mechanik deutliche Kostenvorteile. Auch die Kamera kann auf ihre essenziellen Bestandteile, nämlich Sensor, Elektronik und Schnittstellen reduziert werden; das Vorsehen eines eigenen Kameragehäuses erübrigt sich damit in kostensparender Weise.

Der Objektivanschluss der erfindungsgemäßen Scheimpflug-Kamera ist bevorzugt als einfacher Basisring ausgebildet. Diese axial größenminimierte Bauform ermöglicht eine maximale Nähe zwischen dem von dem Basisring getragenen Objektiv und dem Kamerasensor. Insbesondere kann der Basisring mit einer koaxialen C-Mount-Schnittstelle ausgestattet sein, in die ein entsprechendes Objektiv direkt eingeschraubt werden kann. Sollen hingegen Objektive mit größerem Arbeitsabstand verwendet werden, kann ein Basisring mit einem entsprechend axial dimensionierten Vorsatz verwendet werden, der dann eine passende mechanische Schnittstelle für das ausgewählte Objektiv trägt.

Um die grundsätzlich vorbekannte Schwenkbeweglichkeit des Objektivanschlusses relativ zum Sensor zu ermöglichen, ist bevorzugt vorgesehen, dass der Basisring an zwei einander gegenüberliegenden Positionen mit je einer nach axial hinten gerichteten Lasche mit einem radial ausgerichteten Achskanal versehen ist, in den ein korrespondierender Achszapfen des Kameraanschlusses hineinragt. Die Laschen sind erforderlich, um die aus der Zusammenwirkung zwischen den Achskanälen und den Achszapfen resultierende Schwenkachse nach axial hinten, insbesondere in die Sensorebene hinein zu verlegen. Denkbar ist, dass die Achszapfen von außen durch die als Durchgangskanäle ausgebildeten Achskanäle in das Gehäuse des Kameraanschlusses einschraubbar sind. Diese Variante sorgt für eine besonders einfache Montage.

Bei einer anderen Variante ist vorgesehen, dass der Basisring an zwei einander gegenüberliegenden Positionen mit je einer nach axial hinten gerichteten Lasche mit einem nach radial innen gerichteten Achszapfen versehen ist, der in einen korrespondierenden Achskanal des Kameraanschlusses hineinragt. Bei dieser Variante sind also die Zuordnungen von Achskanal und Achszapfen zu Lasche bzw. Kameraanschluss gegenüber der zuvor beschriebenen Ausführungsform vertauscht. Für die Montage besonders günstig ist es dabei, wenn sich die Achszapfen von außen in Gewinde der Laschen einschrauben und bis in die Achskanäle des Kameraanschlusses vortreiben lassen.

Alternativ zur Verschraubung kann vorgesehen sein, dass jeder Achszapfen als ein zum zugeordneten Achskanal hin federvorgespannter Kugelkopf oder Kugelkopfstift ausgebildet ist. Dies lässt unter gleichzeitiger Ausbildung der Schwenkachse eine spielfreie Rastverbindung zwischen dem Objektivanschluss und dem Kameraanschluss zu.

Günstigerweise weist der Montagesockel einen Montageträgerring auf. An dessen Rand kann, wie bevorzugt vorgesehen, ein nach radial außen ragender Montageträgerfuß fixiert sein. Der Montageträgerfuß wiederum kann als Ankerpunkt für die Installation innerhalb einer größeren Messanordnung dienen. Mit der Fixierung des Montagesockels ist die Position und Ausrichtung des Objektivs und damit dessen Relativausrichtung zur Gegenstandsebene des abzubildenden Gegenstandes vorgegeben.

Allerdings sind der Objektivanschluss (und damit das Objektiv) und der Montagesockel nicht starr miteinander verbunden. Vielmehr muss ein rotativer Freiheitsgrad gewahrt bleiben. Dies lässt sich besonders günstig damit erreichen, dass der Basisring des Objektivanschlusses in seiner vorderen Stirnfläche eine koaxiale Ringnut aufweist, in die ein korrespondierender Lagerringsteg des Montageträgerrings oder eine Mehrzahl von über dessen Umfang verteilten, korrespondierenden Lagerzapfen eingreifen. Auch die umgekehrte Variante ist denkbar. Bei dieser ist vorgesehen, dass der Basisring an seiner vorderen Stirnfläche einen koaxialen Lagerringsteg oder eine Mehrzahl von über seinen Umfang verteilten, axial erstreckten Lagerzapfen aufweist, die in eine korrespondierende Ringnut in der hinteren Stirnseite des Montageträgerrings eingreifen.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine Explosionsdarstellung einer Ausführungsform einer erfindungsgemäßen Scheimpflug-Kamera,
- Figur 2:: die Scheimpflug-Kamera von Figur 1 im zusammengesetzten Zustand in teilsweise transparenter Darstellung sowie
- Figur 3:: eine Schnittdarstellung der Scheimpflug-Kamera der Figuren 1 und 2.

### Beschreibung bevorzugter Ausführungsformen

Gleiche Bezugszeichen in den Figuren deuten auf gleiche oder analoge Elemente hin.

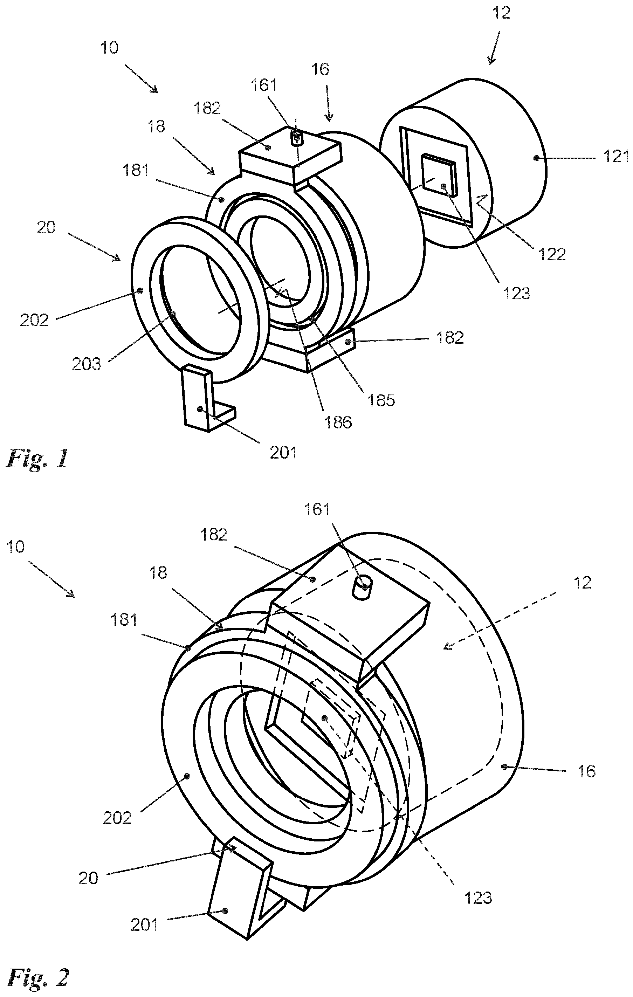

Die Figuren 1 bis 3 zeigen in jeweils unterschiedlicher Darstellung eine bevorzugte Ausführungsform einer erfindungsgemäßen Scheimpflug-Kamera 10. Sie sollen nachfolgend, sofern nicht Bezug auf eine spezielle Figur genommen wird, gemeinsam diskutiert werden.

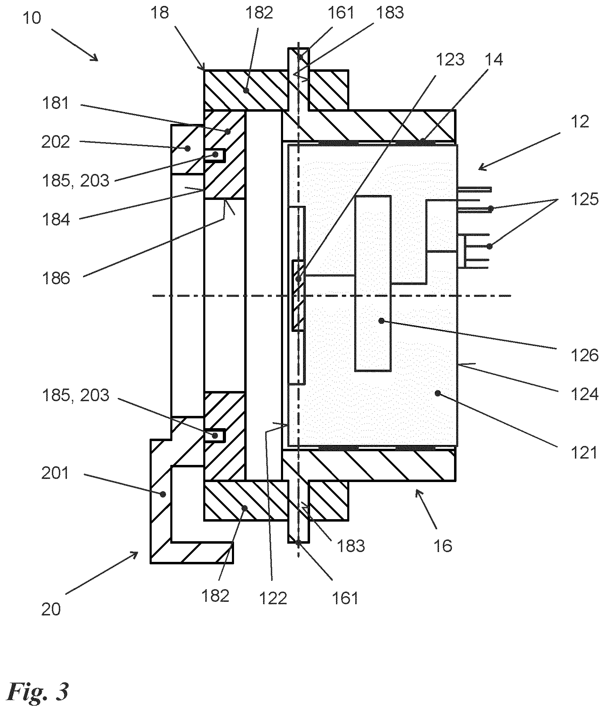

Die Scheimpflug-Kamera 10 umfasst bei der dargestellten Ausführungsform die eigentliche Kamera 12, die erfindungsgemäß einen zylindrischen Sensorträger 121 aufweist, auf dessen vorderer Stirnwand 122 ein Bildsensor 123, beispielsweise ein CCD- oder CMOS-Sensor angeordnet ist. Auf ihrer in Figur 3 erkennbaren, hinteren Stirnseite 124 sind verschiedene elektronische Schnittstellen 125 angeordnet, die mit einer im Inneren des Sensorträgers 121 angeordneten Kameraelektronik 125, die ihrerseits mit dem Sensor 123 verbunden ist, verbunden sind. Der Sensorträger 121 ist über ein in Figur 3 angedeutetes Radiallager 14, welches als Wälz-, bevorzugt aber als Gleitlager ausgebildet sein kann, in einem hohlzylindrischen Kameraanschluss 16 drehbeweglich gelagert ist. Da sowohl der Sensor 123 als auch die Kameraelektronik 126 und sämtliche Schnittstellen 125 an dem Sensorträger 121 festgelegt sind, ist eine Drehbeweglichkeit um beliebige Drehwinkel gewährleistet.

Bei der dargestellten Ausführungsform weist der hohlzylindrische Kameraanschluss 116 im Bereich seines vorderen Endes an zwei einander gegenüberliegenden Positionen je einen nach radial außen ragenden Achszapfen 161 auf. Die Achszapfen 161 sind so positioniert, dass ihre gemeinsame Achse in der Sensorfläche des Sensors 123 verläuft.

Die Achszapfen 161 durchragen je einen Achskanal 183, der in einer nach axial hinten erstreckten Lasche 182 eines im Übrigen axial vor dem Kameraanschluss 16 angeordneten Objektivanschlusses 18 vorgesehen sind. Der Objektivanschluss 18 besteht bei der dargestellten Ausführungsform im Wesentlichen aus einem Basisring 181, an dem besagte Laschen 182 mit ihren Achskanälen 183 festgelegt sind. Die Achszapfen 161 der Kameraaufnahme 16 bilden gemeinsam mit den Achskanälen 183 des Objektivanschlusses 18 eine durch die Sensorebene des Sensor 123 verlaufende Schwenkachse, um welche herum der Kameraanschluss 16 (und mit ihm die Kamera 12) relativ zu dem Objektivanschluss 18 verschwenkbar ist.

Die Innenfläche 186 des Basisringes 181 kann ein Gewinde, beispielsweise nach dem C-Mount-Standard, zum Einschrauben eines Objektivs aufweisen. Denkbar ist auch, dass statt des Objektivs ein in den Figuren nicht gezeigter Vorsatz als Adapter für Objektive anderen Standards und anderen Arbeitsabstandes eingeschraubt wird.

In seiner vorderen Stirnfläche 184 weist der Basisring 181 bei der gezeigten Ausführungsform eine Ringnut 185 auf. In diese Ringnut 185 ragt ein Lagerringsteg 203, d.h. ein der Lagerung dienender, ringförmiger Steg, eines Montagesockels 20 hinein. Der Lagerringsteg 203 ragt nach axial hinten von einem Montageträgerring 202 ab, der gemeinsam mit einem Montageträgerfuß 201 den Montagesockel 20 bildet. Der Lagerringsteg 203 bildet gemeinsam mit der Ringnut 185, in die er hineinragt, ein Drehlager für den Objektivanschluss 18 (und mit ihm für den Kameraanschluss 16 und die darin gelagerte Kamera 12). Der Montageträgerfuß 201 dient der Fixierung der gesamten Scheimpflug-Kamera 10 in einer größeren Messapparatur.

Zusammengefasst bietet die erfindungsgemäße, hochkompakte Scheimpflug-Kamera folgende Verstellmöglichkeiten: Das Objektiv ist gegenüber dem Montagesockel 20 um die durch den Objektivanschluss 18 bzw. um die durch ein in diesen eingeschraubtes Objektiv vorgegebene optische Achse drehbar. Der Kameraanschluss 16 ist um eine durch die Sensorebene des Sensors 123 verlaufende Schwenkachse schwenkbar. Diese Schwenkachse schneidet vorzugsweise eine durch die mittige Flächennormale des Sensors 123 vorgegebene optische Achse der Kamera 12. Um diese wiederum ist die Kamera 12 relativ zum Kameraanschluss 16 verdrehbar.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere lassen sich die lagerbildenden Elemente für die erläuterte Verschwenkung des Kameraanschlusses zum Objektivanschluss sowie für die erläuterte Verdrehung des Objektivanschlusses 18 zum Montagesockel 20 auch umgekehrt zu der dargestellten Ausführungsform mit anderen, dem Fachmann bekannten Mitteln realisieren. Auch ist es denkbar und insbesondere in hellen Umgebungen bevorzugt vorgesehen, dass eine nach hinten erstreckte Schürze des Objektivanschlusses 18 oder eine nach vorne erstreckte, umlaufende Schürze des Kameraanschlusses 16 mit dem jeweils anderen, verschwenkbar angekoppelten Element, d. h. dem Kameraanschluss 16 bzw. dem Objektivanschluss 18, überlappt, um den Sensor vor Lichteinfall durch den Spalt zwischen besagten beiden Elementen zu schützen.

### Bezugszeichenliste

- 10: Scheimpflug-Kamera
- 12: Kamera
- 121: Sensorträger
- 122: vordere Stirnfläche von 121
- 123: Sensor
- 124: hintere Stirnfläche von 121
- 125: Schnittstelle
- 126: Kameraelektronik
- 14: Drehlager
- 16: Kameraanschluss
- 161: Achszapfen
- 18: Objektivanschluss
- 181: Basisring
- 182: Lasche
- 183: Achskanal
- 184: vordere Stirnfläche von 181
- 185: Ringnut
- 186: Innenfläche von 181
- 20: Montagesockel
- 201: Montageträgerfuß
- 202: Montageträgerring
- 203: Lagerringsteg

## Patentansprüche

1. Scheimpflug-Kamera (10), umfassend
- einen Kameraanschluss (16) zur Halterung einer Kamera (12),
- eine in dem Kameraanschluss (16) gehalterte Kamera (12), umfassend einen in einer Sensorebene liegenden Sensor (123) und eine mit dem Sensor (123) verbundene Kameraelektronik (126), wobei die mittige Flächennormale des Sensors (123) eine erste optische Achse vorgibt,
- einen Objektivanschluss (18) zur festen Halterung eines eine zweite optische Achse vorgebenden Objektivs, der gegenüber dem Kameraanschluss (16) um eine die erste optische Achse in der Sensorebene schneidende Schwenkachse derart verschwenkbar ist, dass die erste und die zweite optische Achse je nach Schwenkstellung koaxial zueinander verlaufen oder einander in der Sensorebene schneiden,
- einen Montagesockel (20), in dem der Objektivanschluss (18) um die zweite optische Achse verdrehbar gelagert ist,
**dadurch gekennzeichnet,**
**dass** die Kamera (12) einen zylindrischen Sensorträger (121) aufweist,
- auf dessen vorderer Stirnwand (122) der Sensor (123) in mittiger Positionierung und in zur Zylinderachse des Sensorträgers (121) normaler Ausrichtung fixiert ist und
- dessen hintere Stirnwand (124) eine Schnittstelle zu der im Inneren des Sensorträgers (121) angeordneten Kameraelektronik (126) trägt,
wobei der Kameraanschluss (16) eine zentrale, kreisförmige Durchgangsöffnung aufweist, in der der Sensorträger (121) axial fest und um seine Zylinderachse verdrehbar direkt gelagert ist.

2. Scheimpflug-Kamera (10) nach Anspruch 1,
**dadurch gekennzeichnet,**
**dass** der Objektivanschluss (18) als ein Basisring (181) ausgebildet ist.

3. Scheimpflug-Kamera (10) nach Anspruch 2,
**dadurch gekennzeichnet,**
**dass** der Basisring (181) eine koaxiale C-Mount-Schnittstelle aufweist.

4. Scheimpflug-Kamera (10) nach einem der Ansprüche 2 bis 3,
**dadurch gekennzeichnet,**
**dass** der Basisring (181) an zwei einander gegenüber liegenden Positionen mit je einer nach axial hinten gerichteten Lasche (182) mit einem radial ausgerichteten Achskanal (183) versehen ist, in den ein korrespondierender Achszapfen (161) des Kameraanschlusses (16) hinein ragt.

5. Scheimpflug-Kamera (10) nach einem der Ansprüche 2 bis 3,
dass der Basisring an zwei einander gegenüber liegenden Positionen mit je einer nach axial hinten gerichteten Lasche mit einem nach radial innen gerichteten Achszapfen versehen ist, der in einen korrespondierenden Achskanal des Kameraanschlusses hinein ragt.

6. Scheimpflug-Kamera (10) nach einem der Ansprüche 4 oder 5,
**dadurch gekennzeichnet,**
**dass** jeder Achszapfen als ein zum zugeordneten Achskanal hin federvorgespannter Kugelkopf oder Kugelkopfstift ausgebildet ist.

7. Scheimpflug-Kamera (10) nach einem der vorangehenden Ansprüche,
**dadurch gekennzeichnet,**
**dass** der Montagesockel (20) einen Montageträgerring (202) aufweist.

8. Scheimpflug-Kamera (10) nach Anspruch 7 und einem der Ansprüche 2 bis 6,
**dadurch gekennzeichnet,**
**dass** der Basisring (181) in seiner vorderen Stirnfläche eine koaxiale Ringnut (185) aufweist, in die ein korrespondierender Lagerringsteg (203) des Montageträgerrings (202) oder eine Mehrzahl von über dessen Umfang verteilten, korrespondierenden Lagerzapfen eingreifen.

9. Scheimpflug-Kamera (10) nach Anspruch 7 und einem der Ansprüche 2 bis 6,
**dadurch gekennzeichnet,**
**dass** der Basisring an seiner vorderen Stirnfläche einen koaxialen Lagerringsteg oder eine Mehrzahl von über seinen Umfang verteilten, axiale erstreckten Lagerzapfen aufweist, die in eine korrespondierende Ringnut in der hinteren Stirnseite des Montageträgerrings eingreifen.

10. Scheimpflug-Kamera (10) nach einem der Ansprüche 7 bis 9,
**dadurch gekennzeichnet,**
**dass** am Rand des Montageträgerrings (202) ein nach radial außen ragender Montageträgerfuß (201) fixiert ist.

## Claims

1. Scheimpflug camera (10) comprising
- a camera mount (16) for holding a camera (12),
- a camera (12) held in said camera mount (16), comprising a sensor (123) lying in a sensor plane and camera electronics (126) connected to the sensor (123), wherein the central surface normal of the sensor (123) defines a first optical axis,
- a lens mount (18) for the fixed mounting of a lens defining a second optical axis, the lens mount being pivotable relative to the camera mount (16) about a pivot axis intersecting the first optical axis in the sensor plane in such a way that the first and second optical axes are coaxial with each other or intersect each other in the sensor plane, depending on the pivot position,
- a mounting base (20) in which the lens mount (18) is rotatably mounted about the second optical axis,
**characterized in**
**that** the camera (12) has a cylindrical sensor carrier (121),
- on the front end face (122) of which the sensor (123) is fixed in a central position and in alignment normal to the cylinder axis of the sensor carrier (121), and
- the rear end face (124) of which carries an interface to the camera electronics (126) arranged inside the sensor carrier (121),
wherein the camera mount (16) has a central, circular through-opening in which the sensor carrier (121) is axially fixed and directly mounted so as to be rotatable about its cylinder axis.

2. Scheimpflug camera (10) according to claim 1,
**characterized in**
**that** the lens mount (18) is designed as a base ring (181).

3. Scheimpflug camera (10) according to claim 2,
**characterized in**
**that** the base ring (181) has a coaxial C-mount interface.

4. Scheimpflug camera (10) according to any one of claims 2 to 3,
**characterized in**
**that** the base ring (181) is provided at two opposite positions, each with an axially rearwardly directed tab (182) with a radially aligned axle channel (183) into which a corresponding axle pin (161) of the camera mount (16) projects.

5. Scheimpflug camera (10) according to any one of claims 2 to 3,
**characterized in**
**that** the base ring is provided at two opposite positions, each with a axially rearwardly directed tab with an axle pin directed radially inward, which projects into a corresponding axle channel of the camera mount.

6. Scheimpflug camera (10) according to any one of claims 4 or 5,
**characterized in**
**that** each axle pin is designed as a ball head or ball headed pin, spring-loaded toward the associated axle channel.

7. Scheimpflug camera (10) according to any one of the preceding claims,
**characterized in**
**that** the mounting base (20) has a mounting support ring (202).

8. Scheimpflug camera (10) according to claim 7 and any one of claims 2 to 6,
**characterized in**
the base ring (181) has a coaxial ring groove (185) in its front end face, into which a corresponding bearing ring web (203) of the mounting support ring (202) or a plurality of corresponding bearing pins distributed over its circumference engage.

9. Scheimpflug camera (10) according to claim 7 and any one of claims 2 to 6,
**characterized in**
**that** the base ring has a coaxial bearing ring web or a plurality of axially extending bearing pins distributed over its circumference on its front end face, which engage in a corresponding annular groove in the rear end face of the mounting support ring.

10. Scheimpflug camera (10) according to any one of claims 7 to 9,
**characterized in**
**that** a mounting support foot (201) projecting radially outward is fixed to the edge of the mounting support ring (202).

## Revendications

1. Caméra Scheimpflug (10), comprenant
- un raccord de caméra (16) pour le maintien d'une caméra (12),
- une caméra (12) maintenue dans le raccord de caméra (16), comprenant un capteur (123) situé dans un plan de capteur et une électronique de caméra (126) reliée au capteur (123), la normale centrale à la surface du capteur (123) définissant un premier axe optique,
- un raccord d'objectif (18) pour le maintien fixe d'un objectif définissant un deuxième axe optique, qui peut pivoter par rapport au raccord de caméra (16) autour d'un axe de pivotement coupant le premier axe optique dans le plan du capteur, de telle sorte que le premier et le deuxième axe optique sont coaxiaux l'un par rapport à l'autre ou se coupent l'un l'autre dans le plan du capteur, selon la position de pivotement,
- un socle de montage (20) dans lequel le raccord d'objectif (18) est monté de manière à pouvoir tourner autour du deuxième axe optique,
**caractérisé en ce**
**que** la caméra (12) présente un support de capteur cylindrique (121),
- sur la paroi frontale avant (122) duquel le capteur (123) est fixé en position centrale et dans une orientation normale par rapport à l'axe cylindrique du support de capteur (121) et
- dont la paroi frontale arrière (124) porte une interface avec l'électronique de caméra (126) disposée à l'intérieur du support de capteur (121),
le raccord de caméra (16) présentant une ouverture de passage centrale circulaire dans laquelle le support de capteur (121) est logé directement de manière fixe axialement et de manière à pouvoir tourner autour de son axe de cylindre.

2. Caméra Scheimpflug (10) selon la revendication 1,
**caractérisé en ce**
**que** le raccord d'objectif (18) est conçu comme un anneau de base (181).

3. Caméra Scheimpflug (10) selon la revendication 2,
**caractérisé en ce**
**que** l'anneau de base (181) présente une interface coaxiale C-Mount.

4. Caméra Scheimpflug (10) selon l'une des revendications 2 à 3,
**caractérisé en ce**
**que** l'anneau de base (181) est pourvu, en deux positions opposées l'une à l'autre, d'une patte (182) orientée axialement vers l'arrière et pourvue d'un canal d'axe (183) orienté radialement, dans lequel pénètre un tourillon d'axe (161) correspondant du raccord de caméra (16).

5. Caméra Scheimpflug (10) selon l'une des revendications 2 à 3,
**caractérisé en ce**
**que** l'anneau de base est pourvu, en deux positions opposées l'une à l'autre, d'une patte orientée axialement vers l'arrière avec un tourillon orienté radialement vers l'intérieur, qui fait saillie dans un canal d'axe correspondant du raccord de caméra.

6. Caméra Scheimpflug (10) selon l'une des revendications 4 ou 5,
**caractérisé en ce**
**que** chaque tourillon d'axe est conçu comme une tête sphérique ou une tige de tête sphérique précontrainte par ressort vers le canal d'axe correspondant.

7. Caméra Scheimpflug (10) selon l'une des revendications précédentes,
**caractérisé en ce**
**que** le socle de montage (20) présente un anneau de support de montage (202).

8. Caméra Scheimpflug (10) selon la revendication 7 et l'une des revendications 2 à 6,
**caractérisé en ce**
**que** l'anneau de base (181) présente, dans sa face frontale avant, une rainure annulaire coaxiale (185) dans laquelle s'engage une nervure annulaire de palier correspondante (203) de l'anneau de support de montage (202) ou une pluralité de tourillons correspondants répartis sur sa périphérie.

9. Caméra Scheimpflug (10) selon la revendication 7 et l'une des revendications 2 à 6,
**caractérisé en ce**
**que** l'anneau de base présente, sur sa face frontale avant, une nervure annulaire de palier coaxiale ou une pluralité de tourillons s'étendant axialement et répartis sur sa circonférence, qui s'engagent dans une rainure annulaire correspondante dans la face frontale arrière de l'anneau de support de montage.

10. Caméra Scheimpflug (10) selon l'une des revendications 7 à 9,
**caractérisé en ce**
**qu'**un pied de support de montage (201) faisant saillie radialement vers l'extérieur est fixé sur le bord de l'anneau de support de montage (202).
